(19) Europäisches Patentamt
European Patent Office
Office européen des brevets

(11) **EP 2 508 361 B1**

(12) **EUROPÄISCHE PATENTSCHRIFT**

(45) Veröffentlichungstag und Bekanntmachung des Hinweises auf die Patenterteilung:
**04.06.2014   Patentblatt 2014/23**

(51) Int Cl.:
**B60B 3/10** *(2006.01)*      **B60B 7/00** *(2006.01)*
**B60B 19/10** *(2006.01)*      **F16D 65/847** *(2006.01)*

(21) Anmeldenummer: **12002242.1**

(22) Anmeldetag: **28.03.2012**

(54) **Fahrzeugrad**

Vehicle wheel

Roue de véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2011   DE 102011016535**

(43) Veröffentlichungstag der Anmeldung:
**10.10.2012   Patentblatt 2012/41**

(73) Patentinhaber: **AUDI AG**
**85045 Ingolstadt (DE)**

(72) Erfinder:
• **Schmid, Wolfgang**
**85354 Freising (DE)**
• **Meitinger, Karl-Heinz**
**81667 München (DE)**
• **Kossira, Christoph**
**85053 Ingolstadt (DE)**
• **Beringer, Heinrich**
**85095 Denkendorf (DE)**

(74) Vertreter: **Asch, Konrad**
**AUDI AG**
**Patentabteilung**
**85045 Ingolstadt (DE)**

(56) Entgegenhaltungen:
**EP-A2- 0 145 487      EP-A2- 1 319 526**
**FR-A1- 2 699 453**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 508 361 B1

**Beschreibung**

Die Erfindung betrifft ein Fahrzeugrad umfassend eine Felge, einen an dieser befestigten Bremstopf und eine am Bremstopf befestigte Bremsscheibe, wobei an der Felge mehrere schwenkbar gelagerte plattenförmige Abdeckelemente zum temporären Verschließen zugeordneter felgenseitiger Durchbrechungen vorgesehen sind, wobei jedes Abdeckelement längs der Schwenkachse gegen die Kraft eines Rückstellelements verschiebbar und mit der Felge über ein bei einer Verschiebebewegung zwangsführendes Koppelelement, mittels dem das Abdeckelement von einer Offenstellung in eine Schließstellung, die das Abdeckelement bei Drehung des Rads fliehkraftbedingt einnimmt, bewegbar ist, verbunden ist, nach dem Oberbegriff des Anspruchs 1.

Die Konzeption moderner Felgen unterliegt unterschiedlichen, einander teilweise entgegenlaufenden Anforderungen. Neben einer eine einfache Herstellung ermöglichenden einfachen Felgenkontur ist eine zentrale Forderung, dass die Felge eine möglichst hohe Luftdurchströmung ermöglicht, um im Bedarfsfall die Bremsscheibe optimal über den Luftstrom kühlen zu können. Ferner muss beim Nachheizen der Bremsscheibe im Stand dafür gesorgt werden, dass die Wärme auch ohne Luftströmung abtransportiert werden kann. Das heißt, dass hieraus die Forderung nach einer möglichst "offenen" Felgenstruktur resultiert.

Aus aerodynamischen Gründen jedoch sollte die Felge möglichst geschlossen sein, um Luftverwirbelungen, die durch die Felgendurchbrüche entstehen, möglichst zu verhindern. Im normalen Fahrbetrieb herrscht im Bereich des Unterbodens des Fahrzeugs ein Überdruck, der dafür sorgt, dass Luft durch die Freiräume der Felge gedrückt wird. Würde die Felge als geschlossene Scheibe ausgeführt, so könnte der Cw-Wert, der als Faktor in die Berechnung des Luftwiderstands des Fahrzeugs eingeht, verbessert werden.

Um diesen einerseits aus thermischen, andererseits aus aerodynamischen Gründen einander quasi widersprechenden Anforderungen gerecht zu werden, ist es bekannt, durch Verwendung beweglicher, üblicherweise schwenkbar gelagerter plattenförmiger Abdeckelemente die felgenseitigen Durchbrechungen bedarfsabhängig öffnen und schließen zu können. Bei solchen Systemen sind die plattenförmigen Abdeckelemente zumeist schwenkgelagert und längs der Schwenkachse radial beweglich. Zur Felge hin sind die Abdeckelemente zusätzlich über jeweils ein zwangsführendes Koppelelement verbunden. Mit zunehmender Raddrehzahl nimmt die auf die Abdeckelemente wirkende Fliehkraft immer stärker zu, was dazu führt, dass sie, ausgehend von einer radial innenliegenden Stellung, in der sie die jeweils zugeordnete Durchbrechung öffnen, radial nach außen wandern, wobei während dieser fliehkraftbedingten Radialbewegung infolge der Zwangsführung über das Koppelelement die Abdeckelemente von der Offenstellung in die Schließstellung schwenken. Diese radiale Bewegung erfolgt gegen die Kraft eines Rückstellelements, üblicherweise einer Feder, die das jeweilige Abdeckelement wieder radial nach innen drängt, jedoch aufgrund der hohen Fliehkräfte überdrückt wird. Nimmt die Raddrehzahl wieder ab, ist die Bewegung umgekehrt, die Abdeckelemente öffnen infolge der radial nach innen erfolgenden Bewegung durch das Rückstellelement mit abnehmender Fliehkraft über das zwangsführende Koppelelement automatisch, wenn sie in ihre innenliegende Stellung übergehen.

Um dann, wenn trotz höherer Fahrgeschwindigkeit und radial nach außen bewegten, also geschlossenen Abdeckelementen die Temperatur im Radinneren, also im Bereich der Bremse, hinreichend hoch ist, so dass eine Kühlung unbedingt erforderlich ist, diese über einen Luftstrom durch die Felge zu ermöglichen, ist bei dem beispielsweise aus EP 0 145 487 A2 bekannten Mechanismus ein temperaturgesteuertes Stellelement beispielsweise in Form einer Formgedächtnislegierung oder eines thermischen Bimetalls vorgesehen, das sich bei Erreichen einer hinreichend hohen Stelltemperatur verformt und verformungsbedingt eine Kraft auf das zugeordnete Abdeckelement aufbringt, um dieses von der radial außenliegenden Stellung zurück in die radial innenliegende Offenstellung zu drücken. Hierbei ist jedoch die hohe Flieh- oder Zentripetalkraft zu überdrücken, um das Abdeckelement über das zwangsführende Koppelelement wieder zurückzudrücken. Dies setzt hohe Anforderungen an das jeweilige thermisch gesteuerte Stellelement, die folglich das entsprechende Arbeitsvermögen aufweisen müssen.

Grundsätzlich ergeben sich aus den eingangs erwähnten Anforderungen an ein "aktives" Fahrzeugrad mehrere unterscheidbare Zustände. Im Fahrzeugstillstand sind die plattenförmigen Abdeckelemente geöffnet. Dadurch wird zum einen ein häufig aus Gründen des Designs gewünschter 3D-Effekt (Tiefeneffekt) erzeugt, zum anderen kann, wenn die Bremsscheibe aufgrund einer vorherigen Fahrt nachheizt, die Abwärme durch die Felge abgeleitet werden. Ab einer bestimmten Fahrzeuggeschwindigkeit, z. B. 30 - 40 km/h, ist das Design des Rades für das menschliche Auge nicht mehr zu differenzieren, man sieht lediglich noch eine rotierende Scheibe. Ab dieser Grenzgeschwindigkeit sollten die Abdeckelemente schließen, um die Aerodynamik zu verbessern. Wird hingegen die Betriebsbremse während der Fahrt betätigt, und wärmt sich die Bremsscheibe auf, sind die Abdeckelemente wieder zu öffnen, um die Belüftung der Bremsanlage zu gewährleisten. Es ergeben sich also folgende Zustandsänderungen bezüglich des Abdeckelements:

Abdeckelement geöffnet → Abdeckelement geschlossen, wenn:

$$v > v_{grenz} \text{ und } T < T_{grenz}$$

Abdeckelement geschlossen → Abdeckelement geöffnet, wenn:

$$v < v_{grenz} \text{ oder } T > T_{grenz}$$

Dabei bedeutet v die Istgeschwindigkeit, $v_{grenz}$ die zuvor beschriebene Grenzgeschwindigkeit, T die Isttemperatur im Bereich der Fahrzeugbremse, sowie $T_{grenz}$ eine Grenztemperatur, ab welcher die Abdeckelemente zu öffnen sind.

Bei bekannten Fahrzeugrädern mit den eingangs beschriebenen, beweglichen und zwangsgeführten Abdeckelementen besteht aufgrund der Starrheit oder Steifigkeit der Zwangsführung über das Koppelelement jedoch ein Problem beispielsweise beim Heranfahren an eine Bordsteinkante während eines Einparkvorgangs oder im Falle von Vandalismus. In beiden Fällen befindet sich das Abdeckelement in der ausgeschwenkten, geöffneten Stellung, es liegt also in der felgeninneren Ausgangsstellung. Fährt nun das Fahrzeug an den Bordsteinrand, so kann es dazu kommen, dass sich zunächst das Abdeckelement mit seinem ausgeschwenkten, seitlich von der Felgenebene abstehenden Abschnitt an den Bordstein anlegt. Bei Fortsetzung der Fahrzeugbewegung kann es nun dazu kommen, dass, nachdem lokal auf einen äußerst nah an der Schwenkachse befindlichen Punkt am Abdeckelement gedrückt wird, mithin also ein kurzer Hebel gegeben ist, sehr hohe Kräfte auf die Abdeckelementlagerung wirken, da das Abdeckelement infolge der Starrheit oder Steifigkeit der Zwangsführung dem applizierten Druck nicht folgt. Im Extremfall kann es zu einer Beschädigung des Abdeckelements kommen. Auch im Vandalismusfall, wenn von außen kräftig auf den vorstehenden Abschnitt des Abdeckelements gedrückt wird, kann es zu einer Beschädigung kommen.

Der Erfindung liegt deshalb das Problem zugrunde, ein Fahrzeugrad anzugeben, das es ermöglicht, die plattenförmigen Abdeckelemente auch bei vernachlässigbaren Flieh- oder Zentripetalkräften durch Aufbringen einer begrenzten Kraft schließen zu können.

Zur Lösung dieses Problems ist bei einem Fahrzeugrad der eingangs genannten Art erfindungsgemäß vorgesehen, dass das Koppelelement eine integrierte Elastizität aufweist oder gegen eine solche felgenseitig und/oder abdeckelementseitig gelagert ist, derart, dass die zum Bewegen eines Abdeckelements aus der Offenstellung in die Schließstellung benötigte Kraft begrenzt ist.

Mit besonderem Vorteil kommt erfindungsgemäß kein "starres" Koppelelement zum Einsatz, sondern ein Koppelelement mit einer integrierten Elastizität respektive ein Koppelelement, das gegen eine solche Elastizität felgen- oder abdeckelementseitig gelagert ist. Das Koppelelement ist selbstverständlich in der Lage, seine Zwangsführung bei hinreichend hoher Raddrehzahl zum automatischen Schließen, also seine originäre Funktion, auszuführen. Infolge der erfindungsgemäßen Integration der Elastizität oder der Lagerung des Koppelelements gegen eine solche ist es jedoch möglich, die benötigte Kraft zum Bewegen aus der Offenstellung, die das jeweilige Abdeckelement im Stand oder bei langsamer Fahrt einnimmt, in die Schließstellung zu begrenzen. Die aufzubringende Kraft muss folglich lediglich die integrierte Elastizität "überdrücken", um das jeweilige Abdeckelement aus der aufgeschwenkten offenen Stellung in die geschlossene Stellung zu bewegen. Die Steifigkeit oder Starrheit der Zwangsführung respektive der Bewegungskopplung ist nicht mehr der die aufzubringende Kraft limitierende Faktor, sondern die Steifigkeit der integrierten Elastizität. Das Abdeckelement ist folglich hier quasi "entkoppelt", was das Bewegen aus der Offen- in die Schließstellung im Stand respektive bei langsamer Fahrt, also ohne Einwirken nennenswerter Flieh- oder Zentripetalkräfte, angeht.

Im beschriebenen Beispielsfall eines Einparkvorgangs bedeutet dies, dass bei Annäherung an den die Bordsteinkante und Anlegen eines Abdeckelements an diese mit Fortsetzung der Fahrzeugbewegung das Abdeckelement mit geringem Kraftaufwand einschwenkt, also in die Schließstellung übergeht und sich folglich in die Felgenebene einpasst, ohne dass hierbei hohe Kräfte wirken. Denn der von der Bordsteinkante ausgeübte Druck muss nicht groß sein, um diese Einschwenkbewegung zu erwirken, da lediglich die integrierte Elastizität zu überdrücken ist. Auch im Falle eines manuellen Drückens gegen den vorstehenden Abdeckelementabschnitt schwenkt das Abdeckelement bei relativ geringem Kraftaufwand ein, was zur Vermeidung einer Beschädigung von Vorteil ist.

Diese zusätzliche Elastizität kann entweder mittels eines Federelements gebildet sein, denkbar ist aber auch die Integration eines aus einem elastischen Material bestehenden Elements wie beispielsweise eines elastischen Kunststoffpuffers, beispielsweise eines Gummipuffers oder Ähnlichem. Verwendet werden kann ein beliebiges Bauteil, solange es die erfindungsgemäße Entkopplung ermöglicht.

Das Koppelelement selbst kann nach einer ersten Erfindungsausgestaltung eine Koppelstange sein. Diese Koppelstange ist mit einem Ende beweglich an der Felge fixiert, beispielsweise über ein Kugelgelenk, das eine Schwenk- und Kippbewegung zulässt. Mit dem anderen Ende ist sie an dem Abdeckelement in gleicher Weise z. B. über ein Kugelgelenk beweglich angeordnet, wobei dort lediglich eine Schwenklagerung vorgesehen ist. Bewegt sich nun das Abdeckelement radial nach außen, so kommt es, da während dieser Bewegung die Koppelstange ihre Länge nicht ändert, zu einer Linearbewegung verbunden mit einer Schwenkbewegung um die Abdeckelement-Schwenkachse, resultierend aus der Fixierung der insoweit starren Koppelstange an der Felge und am Abdeckelement.

Die Koppelstange selbst besteht zweckmäßigerweise aus zwei Abschnitten, die über die Elastizität zueinander axial verschiebbar miteinander gekoppelt sind. Sie sind also teleskopartig relativ zueinander gegen die Elastizität des Federelements, beispielsweise einer Schraubenfeder, beweglich. Während der fliehkraftbedingten Bewegung eines Abdeckelements radial nach außen verhält sich die Koppelstange insoweit starr, als sie ihre Länge nicht ändert. Bei geringer Geschwindigkeit oder im Stand jedoch verändert sich die Stangenlänge, wenn von außen auf ein Abdeckelement gedrückt wird, das heißt, dass der eine Stangenabschnitt, nämlich der, der am Abdeckelement angeordnet ist, gegen die Elastizität in Richtung des felgenseitig angeordneten Abschnitts bewegt wird, sich mithin also die Koppelstange etwas verkürzt, was das Einschwenken des Abdeckelements ermöglicht. Die Steifigkeit respektive Federkonstante der integrierten Elastizität definiert die Kraft, die aufzubringen ist, um das Abdeckelement einzuschwenken. Anstelle einer Schraubenfeder kann selbstverständlich auch ein elastisches Kunststoffelement wie beispielsweise ein Gummielement oder dergleichen vorgesehen sein, dessen Federverhalten die Stellkraft definiert.

Alternativ kann die integrierte Elastizität auch dadurch realisiert sein, dass das Koppelelement in sich elastisch biegsam ist. Das heißt, dass das Koppelelement aus einem hinreichend steifen, jedoch in gewissem Maß für das erfindungsgemäße Schließen durch Überdrücken eigenelastischen Material besteht. Das Koppelelement verbiegt sich also beim Schließen selbst und geht nach Entlastung wieder in die gestreckte Ausgangsform zurück.

Alternativ zur Integration der Elastizität, also der Feder oder dergleichen in die zweiteilige Koppelstange ist es aber auch denkbar, die Koppelstange einteilig auszuführen und beispielsweise in ihrer Schwenklagerung am Abdeckelement quasi gegen eine Elastizität zu lagern. Das heißt, dass das Abdeckelement bei von außen darauf drückender Kraft zugedrückt wird und hierbei gegen eine Elastizität im Bereich der Stangenlagerung bewegt wird, wobei diese Elastizität deformiert und gleichzeitig die Koppelstange leicht angehoben wird.

Alternativ zur Verwendung einer Koppelstange als Koppelelement ist es auch denkbar, dass das Koppelelement eine abdeckelementseitig vorgesehene Hülse ist oder umfasst, die von einer die Schwenkachse bildenden Stange durchsetzt ist und mit dieser Stange über eine Kulissenführung zusammenwirkt, wobei die Hülse über die Elastizität am Abdeckelement gelagert ist. Auch bei dieser Erfindungsausgestaltung, die also eine Art Kulissenführung z. B. aus Nut und Führungszapfen im Bereich der Bewegungskopplung Hülse - Stange vorsieht, ist eine Zwangsführung bei einer Bewegung der Abdeckelemente radial nach außen gegeben. Bei geringer Drehzahl oder im Stand kann auch hier kraftbegrenzt gegen das jeweilige Abdeckelement gedrückt werden, das bei dieser Erfindungsausgestaltung relativ zur über die Elastizität am Abdeckelement gelagerten Hülse bewegt wird und in die Schließstellung einschwenkt. Beispielsweise ist hierzu wiederum ein Federelement in Form einer Schraubenfeder oder dergleichen vorgesehen, also eine Drehfeder. Die Hülse bleibt bei dieser über das Stellelement initiierten Bewegung unbewegt, das Abdeckelement wird gegen die Elastizität, also die Feder bewegt, die dabei deformiert wird, bis die Schließstellung erreicht ist. Auch hier ist also zum Schließen lediglich die Rückstellkraft der Elastizität zu überdrücken.

Eine dritte Erfindungsalternative sieht schließlich vor, dass das Koppelelement eine auf der Schwenkachse sitzende Hülse ist, die eine mit der Schwenkachse zusammenwirkende Kulissenführung bildet, und die gegen die Elastizität bewegbar gelagert ist. Bei dieser Efindungsausgestaltung ist die Hülse nicht von der die Schwenkachse bildenden Stange durchsetzt, sondern sitzt an einem Achsabschnitt, über den das Abdeckelement beispielsweise am Felgenaußenkranz schwenkgelagert ist, auf. Die Schwenkachse greift also in die Hülse ein, wo die Kulissenführung beispielsweise in Form eines Kugelgewindetriebs oder Ähnlichem realisiert ist. Die Hülse selbst ist wiederum insoweit mit dem Abdeckelement bewegungsgekoppelt, als bei einer fliehkraftbedingten Radialbewegung des Abdeckelements nach außen die Zwangsführung einsetzt, also das Abdeckelement um die Schwenkachse herum in die Schließstellung geklappt wird. Die Bewegungskopplung zum Abdeckelement ist jedoch auch über die Elastizität insofern elastisch, das Abdeckelement aus der Offenstellung mit einer begrenzten von außen anliegenden Kraft in die Schließstellung gedrückt werden kann, wozu wiederum lediglich die Elastizität, auch hier vorzugsweise über eine Schraubenfeder realisiert, zu überdrücken ist.

Wie einleitend beschrieben, besteht erfindungsgemäß nicht nur die Möglichkeit, in das Koppelelement selbst eine Elastizität zu integrieren. Vielmehr kann erfindungsgemäß das Koppelelement selbst felgen- und/oder abdeckelementseitig gegen eine solche Elastizität gelagert sein. Das Koppelelement, also beispielsweise eine steife Koppelstange, ist folglich gegen ein elastisches Element an der Felge und/oder dem Abdeckelement gelagert, worüber die elastische Beweglichkeit im Bereich des Koppelelements, die die zu überdrückende Elastizität bildet, realisiert wird. Erfindungsgemäß kann eine solche Elastizität mittels eines elastisch deformierbaren Kunststoff- oder Gummielements realisiert sein, gegen das das Koppelelement dann, wenn das Abdeckelement in die Schließstellung zu drücken ist, bewegt wird. Hierbei kann es sich um ein beliebig geformtes Kunststoff- oder Gummibauteil handeln, bevorzugt beispielsweise einen Kunststoff- oder Gummiring, in den das Koppelelement, also beispielsweise die Koppelstange, mit einem entsprechenden Lagerabschnitt eingreift. Das Kunststoff- oder Gummielement, insbesondere in Form des Rings, ist felgen- und/oder abdeckelementseitig entsprechend fixiert, beispielsweise in einer entsprechenden dort vorgesehenen Halterung aufgenommen, oder in entsprechenden, dort vorgesehenen geometrischen Eintiefungen und Ähnlichem.

Weitere Vorteile, Merkmale und Einzelheiten der Erfindung ergeben sich aus dem im Folgenden beschriebenen Ausführungsbeispiel sowie anhand der Zeichnungen. Dabei zeigen:

Fig. 1    eine Prinzipdarstellung eines Teils eines Fahrzeugrads gemäß Stand der Technik im Ruhezustand,

Fig. 2    das Fahrzeugrad aus Fig. 1 in Rotation und geschlossenem Abdeckelement,

Fig. 3    eine Darstellung eines erfindungsgemäßen Fahrzeugrads in Teilansicht mit einem Koppelelement mit einer einzigen, doppelt wirkenden integrierten Elastizität, mit in der Offenstellung befindlichem Abdeckelement,

Fig. 4    das Fahrzeugrad aus Fig. 3 mit in die Schließstellung bewegtem Abdeckelement,

Fig. 5    eine Darstellung eines erfindungsgemäßen Fahrzeugrads einer weiteren Ausführungsform in einer Teilansicht mit integrierter doppelt wirkender Elastizität mit in Offenstellung befindlichem Abdeckelement,

Fig. 6    das Fahrzeugrad aus Fig. 5 mit geschlossenem Abdeckelement,

Fig. 7    eine Darstellung eines erfindungsgemäßen Fahrzeugrads einer weiteren Ausführungsform mit lagerungsseitig vorgesehenen Elastizitäten, mit in Offenstellung befindlichem Abdeckelement, und

Fig. 8    das Fahrzeugrad aus Fig. 7 mit in Schließstellung gedrücktem Abdeckelement.

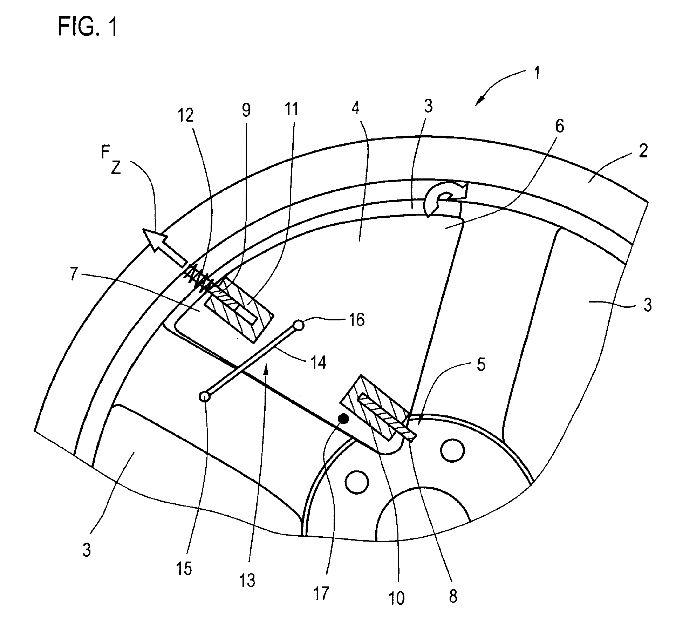

Fig. 1 zeigt eine Darstellung eines Teils eines Fahrzeugrads 1, umfassend eine Felge 2, an der hier nicht näher gezeigt üblicherweise ein Bremstopf und eine am Bremstopf befestigte Bremsscheibe in der Montagestellung befestigt respektive zugeordnet sind. Die Felge 2 weist mehrere der Durchlüftung und Optik dienende Durchbrechungen 3 auf, denen im gezeigten Beispiel jeweils ein plattenförmiges Abdeckelement 4 zugeordnet ist, wobei in Fig. 1 lediglich ein solches Abdeckelement 4 gezeigt ist. Dieses Abdeckelement 4 dient dazu, die jeweilige Durchbrechung 3 großflächig zu verschließen und bei Bedarf zur Durchlüftung zu öffnen.

Hierzu ist das Abdeckelement 4 um eine Schwenkachse 5 um einige Winkelgrade, z. B. 5° - 10° schwenkbeweglich. Bei der Darstellung gemäß Fig. 1 (dies gilt auch für alle Folgedarstellungen) handelt es sich um eine Innenseitenansicht der Felge 2. Die Schwenkbeweglichkeit eines jeden Abdeckelements 4 um die Schwenkachse 5 ist derart, dass jedes Abdeckelement 4 mit seiner in Fig. 1 gezeigten rechten äußeren Ecke 6 zum Felgeninneren, also aus der Zeichenebene zum Betrachter hin herausschwenkt. Die linke obere Ecke 7 hingegen schwenkt in die Zeichenebene, also vom Betrachter weg, zum Felgenäußeren. Dies ist in der in Fig. 1 gezeigten Offenstellung dargestellt, das heißt, dass hier das Abdeckelement 4 in einer geöffneten Position gezeigt ist, in welcher die rechte obere Ecke 6 nach innen, also zum Betrachter hin geschwenkt ist, während die linke obere Ecke 7 nach außen, vom Betrachter weg geschwenkt ist. Es bilden sich also Lüftungsschlitze aus. Die Schwenklagerung ist hier über zwei Achsstifte 8, 9 realisiert, die längsbeweglich in entsprechenden Halterungen 10, 11, die an der Innenseite eines jeden Abdeckelements 4 angeordnet sind, aufgenommen sind. Beide Achsstifte 8, 9 sind lagefest an der Felge 2 in entsprechenden Aufnahmen fixiert.

Die radial außenliegende Halterung 11 ist gegen ein Federelement 12 gelagert, im gezeigten Beispiel eine Schraubenfeder. Dieses Federelement 12 dient dazu, eine Rückstellkraft auf das Abdeckelement 4 auszuüben, wenn dieses, worauf nachfolgend noch eingegangen wird, zentripetalkraftbedingt bei einer Raddrehung nach außen wandert.

Vorgesehen ist ferner ein Koppelelement 13, hier in Form einer starren Stange 14, die an der Felge 2 sowie am Abdeckelement 4 über jeweilige Kugelgelenklagerungen 15, 16 gelagert ist, das heißt sie ist über diese Kugelgelenklagerungen 15, 16 relativ zur Felge 2 bzw. dem Abdeckelement 4 beweglich aufgenommen.

Vorgesehen ist ferner ein hier nur prinzipiell dargestelltes, thermisch gesteuertes Stellelement 17, bei dem es sich wie im Stand der Technik üblich um einen Bimetallaktor oder einen Formgedächtnislegierungsaktor handelt. Dieses Stellelement 17 ist am Fahrzeugrad 1 vorgesehen, oder dem Fahrzeugrad zugeordnet. Es kann an der Felge oder am Bremstopf angeordnet sein. Über dieses Stellelement 17 wird lokal ein Druck auf die in den Figuren gezeigte Innenseite des Abdeckelements 4 ausgeübt. Dieser Druck dient dazu, das Abdeckelement 4 aus seiner geschlossenen Stellung in die geöffnete Stellung zu bewegen, also um die Schwenkachse 5 zu schwenken.

Fig. 1 zeigt das Fahrzeugrad in der Ruhestellung bzw. bei sehr niedriger Drehzahl. Es wirkt keine bzw. eine sehr geringe Zentripetalkraft auf die Abdeckelemente 4, die sich noch in der geöffneten Stellung befinden.

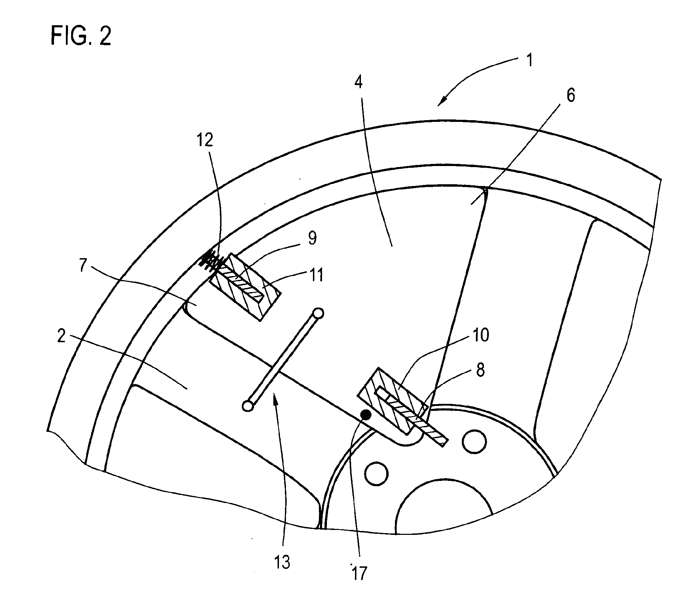

Dreht das Fahrzeugrad schneller, fährt also das Kraftfahrzeug, an dem sich das jeweilige Rad befindet, schneller, so nimmt die wirkende Zentripetalkraft zu, wie in Fig. 1 mit $F_z$ dargestellt ist. Dies führt dazu, dass die einzelnen Abdeckelemente 4 längs der Schwenkachse 5 radial nach außen wandern, eine radiale Längsbewegung um wenige Millimeter bis Zentimeter ist konstruktionsbedingt gegeben. Bedingt durch die über das starre Koppelelement 13 realisierte Kopplung zwischen Felge 2 und Abdeckelement 4 kommt es während dieser radialen Längsbewegung dazu, dass eine der Längsbewegung überlagerte Schwenkbewegung einsetzt, die das jeweilige Abdeckelement in die Schließstellung zwingt. Das Koppelelement 13 bewirkt also eine Zwangsbewegung von der Offen- in die Schließstellung. Ersichtlich, siehe Fig. 2, befindet sich das Abdeckelement radial gesehen etwas weiter außen, der innere Achsstift 8 ist etwas aus der Halterung 10 gewandert, der äußere Achsstift 9 liegt weiter innen in der Halterung 11. Das rechte Eck 6 und das linke Eck 7 sind in der jeweils eingeschwenkten, also in der Zeichenebene liegenden Position, die Durchbrechung 3 ist geschlossen. Infolge der Radialbewegung ist auch das Federelement 12 komprimiert, dieses übt eine Rückstellkraft auf das Abdeckelement 4 aus. Nimmt die Drehzahl wieder ab, so führt diese Rückstellkraft dazu, dass sich das jeweilige Abdeckelement 4 wieder öffnet, wenn über die Rückstellkraft die Zentripetalkraft $F_z$ wieder überdrückt werden kann.

Soll nun bei höherer Fahrgeschwindigkeit aufgrund der thermischen Gegebenheiten das jeweilige Abdeckelement 4 wieder geöffnet werden, so muss über das Stellelement 17 ein derart hoher Druck aufgebaut werden, dass infolge der starren Kopplung über das Koppelelement 13 eine hohe und der Zentripetalkraft $F_z$ entgegenwirkende Kraft ausgeübt wird, die das Abdeckelement 4 auf dem gleichen Bewegungs- und Schwenkweg zurückbewegt, so dass es die in Fig. 1 gezeigte Offenstellung einnimmt. Die Zentripetalkraft $F_z$ kann dabei beachtlich groß werden, abhängig von der Rotationsgeschwindigkeit, weshalb zwangsläufig über das Stellelement eine entsprechend hohe Gegenkraft zum Öffnen aufgebaut werden müsste. Dies ist im Stand der Technik bei Verwendung von Bimetallstreifen und Ähnlichem jedoch kaum zu bewerkstelligen.

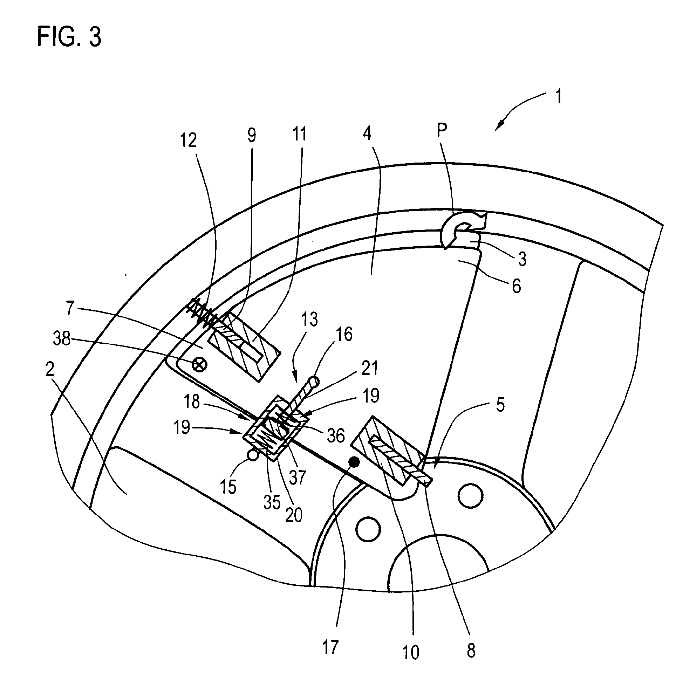

Demgegenüber zeigt beispielsweise Fig. 3 ein erfindungsgemäßes Fahrzeugrad 1, wobei für gleiche Bauteile gleiche Bezugszeichen verwendet werden. In dieser wie auch den weiteren Figuren ist ein thermisches Stellelement 17 gezeigt, das zum Aufdrücken eines Abdeckelements während der Fahrt dient, um die Bremse zu belüften. Ferner ist jeweils eine integrierte Elastizität vorgesehen, die diese Aufdrückbewegung von der Schließstellung in die Offenstellung kraftbegrenzt. Diese Elemente, also das Stellelement sowie die diese Bewegung kraftbegrenzende Elastizität sind nicht erfindungswesentlich, die Erfindung betrifft vielmehr die in dieser wie auch den weiteren Figuren gezeigte Elastizität, die ein kraftbegrenztes Drücken des Abdeckelements aus der Offenstellung, die es bei geringer Drehzahl oder im Stand einnimmt, in die Schließstellung, in der es innerhalb der Felgenebene liegt oder sogar durchschwenken kann, ermöglicht. D.h., dass das Stellelement und die erstgenannte Elastizität nicht vorgesehen werden müssen, mitunter sind sie je nach Auslegung des Fahrzeugs bzw. des Bremssystems und/oder der Betriebsweise des Fahrzeugs auch nicht erforderlich. In den Figuren sind sie dennoch gezeigt und werden nachfolgend erläutert, da sie grundsätzlich auch vorgesehen werden können.

Der Schwerpunkt liegt jedoch auf der Elastizität, die das kraftbegrenzte Bewegen des Abdeckelements von der Offenstellung in die Schließstellung ermöglicht. D.h., dass die Ausführungen, die doppeltwirkende Elastizitäten aufweisen, auch nur die eine diese Bewegung von der Offen- in die Schließstellung kraftbegrenzende Elastizität aufweisen können.

Das Fahrzeugrad 1 umfasst ebenfalls eine Felge 2 mit diversen Durchbrechungen 3 sowie diesen jeweils zugeordnete Abdeckelemente 4. Diese sind wiederum um eine Schwenkachse 5 verschwenkbar, die Schwenkachse 5 ist über geeignete Achsstifte 8, 9 mit entsprechenden Halterungen 10, 11 am Abdeckelement 4 realisiert. Wiederum ist ein Federelement 12 vorgesehen, das beim radialen nach außen Wandern komprimiert wird und die Rückstellkraft, die zum Zurückführen bei hinreichend niedriger Drehzahl dient, aufbaut.

Fig. 3 zeigt eine Ausführungsform eines erfindungsgemäßen Fahrzeugrads 1, bei dem am Koppelelement 13 eine doppelt wirkende Elastizität 18 vorgesehen ist. Fig. 3 zeigt das ruhende Fahrzeugrad 1 mit in Offenstellung befindlichem Abdeckelement 4. Die rechte obere Ecke 6 ist nach innen, also zum Betrachter hingeschwenkt, während die linke obere Ecke 7 nach außen, vom Betrachter weggeschwenkt ist.

Das Koppelelement 13 besteht, wie beim Ausführungsbeispiel gemäß Fig. 3, aus einem quasi zylinderartigen Elementbauteil 20, sowie einem quasi kolbenartig darin geführten Elementbauteil 21. In dem zylinderartigen Elementbauteil 20 ist die integrierte Elastizität 18 angeordnet, die hier doppelt wirkend ist und mittels zweier Federelemente 19 realisiert ist, auch hier mittels zweier Schraubenfedern 35, 36 realisiert ist. Die Schraubenfedern 35, 36 liegen an unterschiedlichen Seiten des Kolbens 37 des Elementbauteils 21 an, sind also an dem Kolben 37 abgestützt, an der anderen Seite jeweils am zylinderartigen Elementbauteil 20. Das heißt, dass der Kolben 37 letztlich in beiden Bewegungsrichtungen gegen jeweils eine Schraubenfeder 35, 36 gelagert ist.

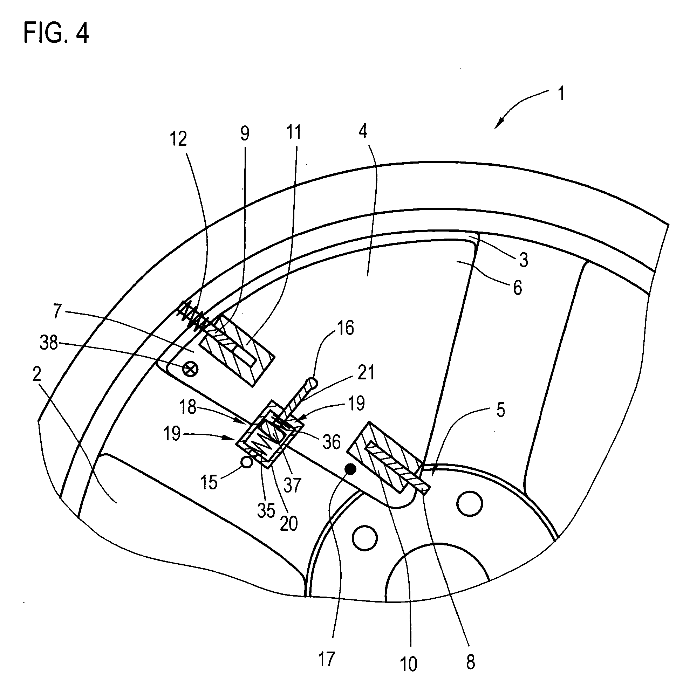

Die Schraubenfeder 35 hat die gleiche Funktion wie die Schraubenfeder gemäß Fig. 3, die das dortige Federelement 19 bildet. Sie dient dazu, die Kraft zu begrenzen, die, den Ausführungen bezüglich der Figuren 3 und 4 folgend, zum Begrenzen der Kraft beim Übergang von der Schließstellung in die Offenstellung, realisiert über das Stellelement 17, aufzubringen ist.

Die zweite Schraubenfeder 36 dient dazu, die Kraft zum Bewegen des Abdeckelements 4 von der in Fig. 3 gezeigten Offenstellung in die in Fig. 4 gezeigte Schließstellung zu begrenzen.

Es sei angenommen, dass von der Außenseite, wie durch das Symbol 38 in Fig. 3 dargestellt ist, auf das ausgeschwenkte Eck 7 der Abdeckplatte gedrückt wird. Dies führt dazu, dass es zu einer Verschwenkung um die Schwenkachse 5 kommt, ohne jedoch die Zwangskopplung zu betätigen, mithin also das Abdeckelement 4 nicht längs der Schwenkachse 5 zu verschieben. Denn bei Druck auf die Ecke 7 wird das Federelement 36, siehe Fig. 4, zusammengedrückt, während sich das Federelement 35 etwas längt. Es ist also zum Einschwenken, beispielsweise beim Anstoßen an eine Bordsteinkante oder zum unbewussten oder bewussten manuellen Eindrücken, lediglich erforderlich, die Elastizität 18, hier realisiert über die Schraubenfeder 36, zu überdrücken, also die Schraubenfeder 36 zusammenzudrücken. Unterstützend wirkt die sich entspannende Schraubenfelder 35. Es kommt zu einer leichten Einschwenkbewegung des Koppelelements 13, jedoch nicht zu einer axialen Zwangsführung. Die Einschwenkbewegung ist in Fig. 3 mit dem Pfeil P dargestellt.

An dieser Stelle sei darauf hingewiesen, dass selbstverständlich auch die Möglichkeit besteht, nur eine einfach wirkende Elastizität 18 vorzusehen, die die benötigte Kraft für die beschriebene Einschwenkbewegung begrenzt. In diesem Fall würde lediglich die Schraubenfeder 36 vorgesehen sein, die Schraubenfeder 35 wäre nicht integriert. Das heißt, dass die Elastizität also nur einseitig wirkend ist. In diesem Fall wäre lediglich die Bewegung von der Offenstellung in die Schließstellung entkoppelt, also kraftmäßig begrenzt, nicht aber die Bewegung von der Schließstellung in die Offenstellung.

Die Funktion der mittels der Schraubenfeder 35 realisierten Elastizität würde die folgende. Ist das Fahrzeugrad 1 in Rotation, so ist die Rotationsgeschwindigkeit so groß, dass die Zentripetalkraft dazu führt, dass die Abdeckelemente 4 radial nach außen wandern und von der vormals geöffneten Stellung, in denen also die Ecken 6, 7 ausgeschwenkt sind, in die Schließstellung wandert. Die der radialen Längsbewegung überlagerte Schwenkbewegung wird auch hier über das trotz Integration der Elastizitäten 18 und hier insbesondere der Schraubenfeder 35 hinreichend steife Koppelelement 13 erzwungen, auch hier ist also eine Zwangskopplung realisiert.

Soll nun jedoch aufgrund der insbesondere im Bereich der Bremse herrschenden Temperaturen eine Durchbrechung 3 teilweise geöffnet werden, um einen Luftstrom durch die Felge zu ermöglichen, so ist dies mittels eines thermisch gesteuerten Stellelements in Form eines Bimetallstreifens oder insbesondere eines Dehnstoffarbeitselements möglich, da aufgrund der koppelelementseitig integrierten Elastizität 18 nicht mehr eine derart hohe Kraft, die größer als die wirkende Zentripetalkraft ist, aufzubringen ist, sondern eine wesentlich geringere Kraft. Drückt das Stellelement auf die Innenseite des Abdeckelements 4, so schwenkt dieses um die Schwenkachse 5, während welcher Bewegung das Koppelelement quasi gestaucht wird, wobei bei der gezeigten doppelt wirkenden Elastizität die Schraubenfeder 36, die sich dabei entspannt, unterstützt.. Infolge der integrierten Elastizität 18 mittels der Schraubenfeder 35, also der teleskopartigen, instabilen Ausführung des Koppelelements 13, ist es möglich, mit relativ geringem Kraftaufwand dieses zu deformieren, es muss lediglich der Widerstand, den die Schraubenfeder 35 bildet, über das Stellelement 17 überdrückt werden. Das Abdeckelement 4 selbst behält seine radial ausgefahrene Stellung, es schwenkt lediglich um die Schwenkachse 5 unter gleichzeitiger Überdrückung respektive Deformation des Federelements 19. Die Position respektive Orientierung des Koppelelements 13 bleibt im Wesentlichen erhalten, da es sich lediglich verkürzt, jedoch keine Radialbewegung vorkommt. Ersichtlich wird das rechte Eck 6 aus der Zeichenebene zum Betrachter hin geschwenkt, während das linke Eck 7 in die Zeichenebene vom Betrachter weg geschwenkt wird. Der Druckpunkt, an dem das Stellelement 17 seine Kraft auf das Abdeckelement 4 einbringt, liegt - radial gesehen - in den jeweiligen Figuren links von der Schwenkachse 5. Da der Anbindungspunkt des Kugelgelenks 16 jedoch rechts, also auf der anderen Schwenkachsenseite liegt, kommt es infolge des Aufschwenkens aus der Zeichenebene dieses rechts von der Schwenkachse liegenden Abdeckelementabschnitts zur "Stauchung" des Koppelelements 13.

Sobald das Stellelement 17 den Druck reduziert, also entlastet, drückt die integrierte Elastizität 18, also das Federelement 19, das Elementbauteil 21 wieder aus dem Elementbauteil 20 heraus, das Koppelelement 13 längt sich wieder, worüber das Abdeckelement 4 wieder in die Schließstellung gedrückt wird. All dies geschieht während der Rotation des Fahrzeugrads 1, die wie daraus resultierend auch die Zentripetalkraft $F_z$ beliebig groß sein kann, da die Rotationsgeschwindigkeit und die Zentripetalkraft $F_z$ zur über das Stellelement 17 initiierten Öffnung des Abdeckelements 4 keine Rolle spielt.

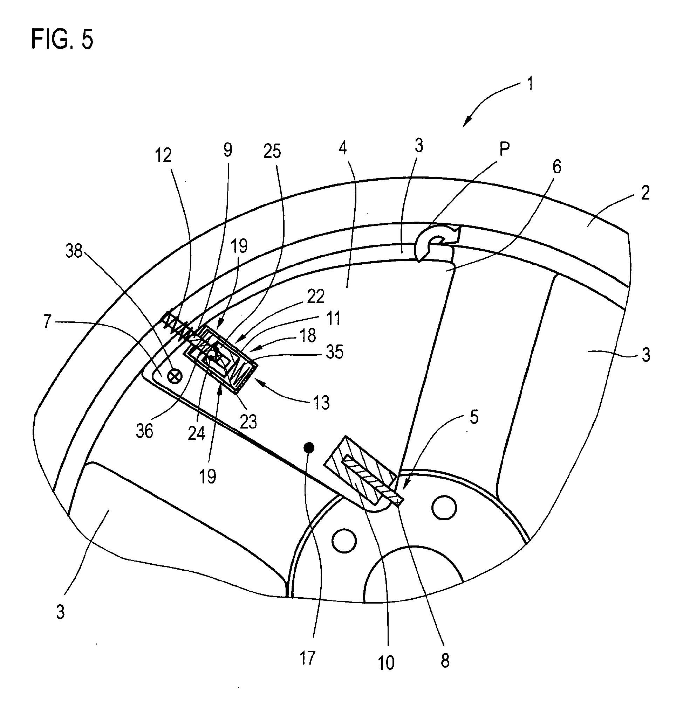

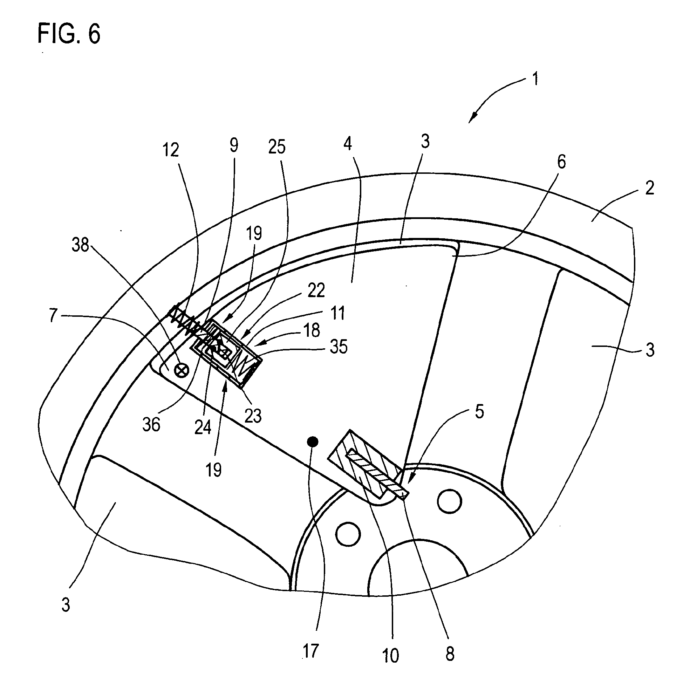

Die Figuren 5 und 6 zeigen ein weiteres Ausführungsbeispiel eines erfindungsgemäßen Fahrzeugrades umfassend wiederum eine Felge 2 mit Durchbrechungen 3 sowie diesen jeweils zugeordneten Abdeckelementen 4, wobei auch hier wiederum nur ein Abdeckelement gezeigt ist. Dieses ist wiederum über eine Schwenkachse 5 gebildet durch die beiden Achsstifte 8, 9 und ihre jeweiligen Halterungen 10, 11 realisiert.

Vorgesehen ist auch hier ein Koppelelement 13, das hier jedoch anders ausgeführt ist als bezüglich der vorstehenden Figuren. Das Koppelelement 13 ist hier als Kugelgewindetrieb 22 ausgeführt. Der Achsstift 9 ist drehfest an der Felge angeordnet. An ihm ist, nur exemplarisch gezeigt, ein Außengewinde 23 vorgesehen, in dem, wiederum nur exemplarisch gezeigt, Kugeln 24 laufen, die an einer Kugelhülse 25 vorgesehen sind. Die Kugelhülse 25, die quasi eine Art Mutter bildet, ist wiederum drehfest in der Halterung 11, die also eine Art Außenhülse darstellt, aufgenommen. In der Halterung 11 ist wiederum eine Elastizität 18 vorgesehen, auch hier in Form einer Schraubenfeder 19, gegen die die Hülse 25 gelagert ist. Auch hier ist eine doppelt wirkende Elastizität 18 integriert, wiederum realisiert mittels zweier Federelemente 19 in Form zweier separater Schraubenfedern 35, 36.

Im Inneren der Halterung 11 sind die beiden Schraubenfedern 35, 36 angeordnet. Die eine Schraubenfeder 35 greift am Boden der Halterung 11 an, das andere Ende ist an der Unterseite der Hülse 25 aufgelagert. Die andere Schraubenfeder 36 greift an der Oberseite der Hülse 25 und am anderen Ende der Halterung 11 an. Das heißt, dass die Hülse 25 (ähnlich wie der Kolben 37 gemäß der Ausführungsform nach den Figuren 3 und 4) an beiden Seiten gegen jeweils eine Schraubenfeder 35, 36 gelagert ist.

Der Schraubenfeder 35 kommt wiederum die gleiche Funktion zu wie der die einfach wirkende Elastizität 18 in Fig. 3 bildende Schraubenfeder 19. Sie dient zur Kraftbegrenzung beim Übergang von der Schließstellung in die Offenstellung, resultierend durch eine Aktion des Stellelements 17. Hierüber wird trotz wirkender hoher Zentripetalkraft die Kraft zum Bewegen des Abdeckelements wie beschrieben begrenzt.

Die zweite Schraubenfeder 36 dient zur Begrenzung der aufzuwenden Kraft, um bei ruhendem oder sich langsam drehendem Fahrzeugrad ein die Kraft zum Bewegen von der in Fig. 5 gezeigten Offenstellung in die in Fig. 6 gezeigte Schließstellung zu begrenzen. Auch hier ist durch das Symbol 38 dargestellt, dass von außen, also aus der Zeichenebene heraus, auf die ausgeschwenkte Ecke 7 des Abdeckelements 4 gedrückt wird. Dies führt dazu, dass es zu einer Verdrehung der Halterung 11 und damit der Hülse relativ zum lagefesten Achsstift 9 kommt. Die Hülse 25 wandert nun etwas längs des Achsstifts 9 nach außen, so dass die Schraubenfeder 36 komprimiert wird, während die Schraubenfeder 35 etwas gelängt wird, siehe Fig. 6. Das Abdeckelement 4 kann einschwenken, es geht in die in Fig. 6 gezeigte Schließstellung über, ohne dass es zu einer nennenswerten Längsverschiebung des Abdeckelements entlang der Schwenkachse 5 kommt. Denn auch hier ist die Bewegung über die integrierte Schraubenfeder 36, mithin also die Elastizität 18, auch in dieser Bewegungsrichtung entkoppelt, wie dies auch bei der Ausgestaltung gemäß der Figuren 3 und 4 der Fall ist.

Die Funktion der Schraubenfeder 35 ist folgende. Dreht das Fahrzeugrad schneller, so nimmt die Zentripetalkraft $F_Z$ zu, was dazu führt, dass das Abdeckelement 4 radial nach außen wandert, wie auch bei der Ausführungsform zuvor beschrieben. Infolge der drehfesten Anordnung des Achsstifts 9 und der Hülse 25 kommt es über die Kugelgewindetriebkopplung dazu, dass bei dieser radialen Längsbewegung über den Kugelgewindetrieb eine erzwungene Schwenkbewegung um die Schwenkachse 5 erfolgt, die dazu führt, dass die Abdeckelemente 4 in die Schließstellung schwenken, wobei das Abdeckelement 4 ein Stück weit radial nach außen wandert, der Achsstift 8 greift nicht mehr so weit in die Halterung 10 ein, während der Achsstift 9 weiter in der Hülse 25 aufgenommen ist. Das Federelement 12 ist komprimiert. Die Elastizität 18, also die Schraubenfeder 35, ist noch nicht beansprucht, da sie während dieser radialen Längs- und Schwenkbewegung nicht nennenswert beansprucht wird.

Soll nun über das auch hier vorgesehene thermisch gesteuerte Stellelement 17, wie beispielsweise ein Dehnstoffarbeitselement, bei hoher Drehzahl das jeweilige Abdeckelement 4 geöffnet werden, so drückt das Stellelement 17 wiederum auf die Innenseite des jeweiligen Abdeckelements. Infolge des Drucks kommt es nun dazu, dass die Hülse 25, die drehfest mit der Halterung 11 verbunden ist, die ihrerseits wiederum drehfest an dem Abdeckelement 4 angeordnet ist, um die Schwenkachse 5 gedreht wird, und zwar in einer Richtung entgegengesetzt zur Bewegungsrichtung während der Radialbewegung nach außen. Infolge der Kopplung der Hülse 25 mit dem drehfest an der Felge befindlichen Achsstift 9 über den Kugelgewindetrieb 22 kommt es nun dazu, dass die Hülse 25 etwas, nämlich drehwinkelabhängig, in das Innere das Aufnahme 11 wandert, dabei das Federelement 19, also die Elastizität komprimierend. Die radiale Lage des Abdeckelements 4 bleibt hierbei unverändert, da letztlich lediglich die Hülse 25 etwas längs der Schwenkachse wandert, diese Wanderbewegung wird jedoch, da die Hülse 25 zwar drehfest, jedoch axial beweglich in der Aufnahme 11 angeordnet ist, nur auf das Federelement 19, dieses komprimierend übertragen. Auch hier ist also letztlich wiederum nur das Federelement 19 zu überdrücken, der Widerstand, den der Kugelgewindetrieb 22 darstellt, ist demgegenüber vernachlässigbar. Das heißt, dass auch hier mit relativ geringer Kraft auch bei hoher Drehgeschwindigkeit das jeweilige Abdeckelement 4 geöffnet werden kann, ohne dass die aufzubringende Kraft auch nur näherungsweise in der Größenordnung der herrschenden, beachtlich hohen Zentripetalkraft $F_Z$ liegt.

Auch hier gilt, dass selbstverständlich auch nur eine einfach wirkende Elastizität 18 vorgesehen sein kann, die kraftbegrenzend bei einer Bewegung von der Offenstellung gemäß Fig. 5 in die Schließstellung gemäß Fig. 6 wirkt. In diesem Fall wäre nur die Schraubenfeder 36 zur Bildung der Elastizität 18, die dann nur einfach wirkend ist, vorgesehen, die Schraubenfeder 35 wäre nicht vorhanden. Das heißt, dass dann die bei der Ausgestaltung gemäß der Figuren 5 und 6 realisierte Entkopplung und Kraftbegrenzung bei einer durch das Stellelement 17 induzierten Bewegung von der Schließstellung in die Offenstellung nicht gegeben wäre.

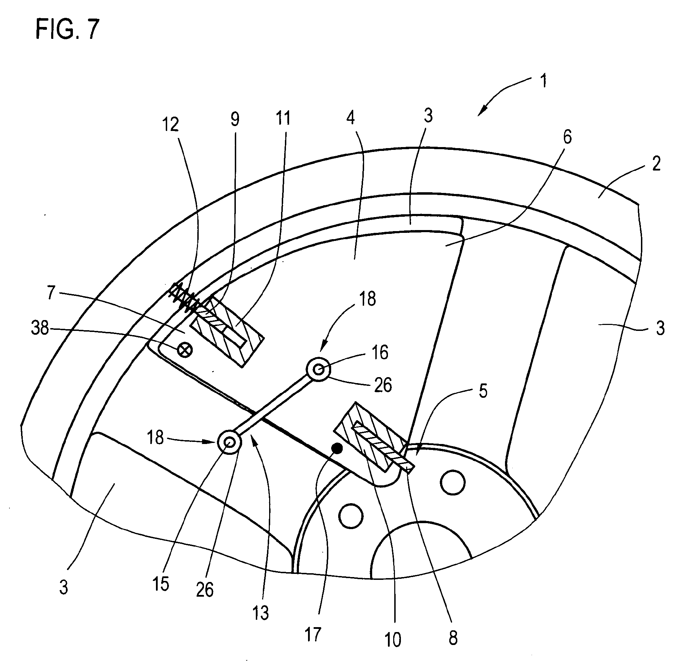

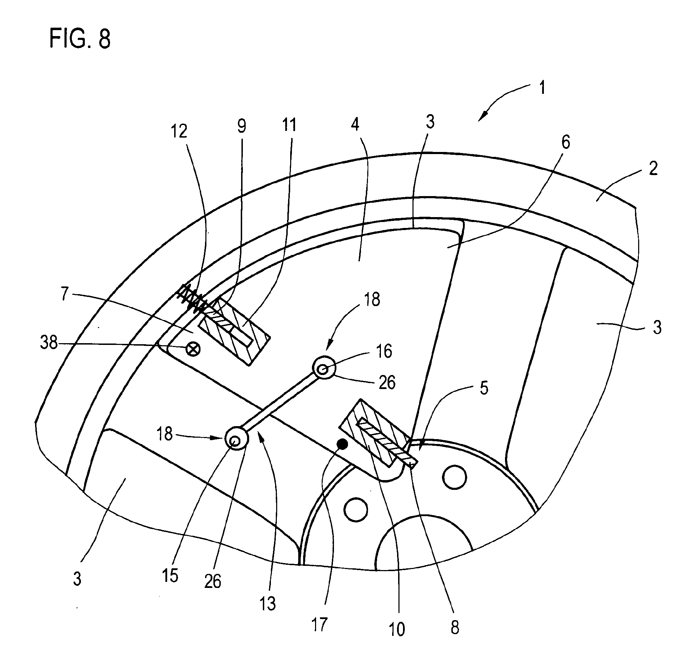

Die Figuren 7 und 8 zeigen schließlich eine weitere erfindungsgemäße Ausführungsform eines Fahrzeugrads 1, wiederum umfassend eine Felge 2 mit Durchbrechungen 3 und zugeordneten Abdeckelementen 4, die um eine Schwenkachse 5 gebildet über die bereits beschriebenen Achsstifte 8, 9 in ihren jeweiligen Halterungen 10, 11 schwenkgelagert sind. Das Koppelelement 13 ist hier wiederum als steife Stange 14 ausgeführt, die hier einstückig ist, jedoch im Bereich ihrer Lagerungen 15, 16, die nicht zwingend als Kugelgelenklagerungen ausgeführt sein müssen, über entsprechende Elastizitäten 18 an der Felge 2 bzw. dem Abdeckelement 4 gelagert ist. Das heißt, dass hier die Elastizität nicht quasi koppelelementseitig integriert ist, sondern in den Bereich der jeweiligen Lagerungen des Koppelelements an der Felge bzw. dem Abdeckelement 4 gesetzt ist. Die Elastizitäten 18 sind beispielsweise in Form von Gummi- oder Kunststoffringen 26 realisiert, die an entsprechenden Aufnahmen an der Felge und am Abdeckelement fixiert sind. Wenngleich die jeweilige Elastizität 18 im Bereich der Lagerungen 15, 16 vorgesehen sind, kann auch nur eine Elastizität 18 vorgesehen sein kann. Die Elastizitäten sind hier mittels Kunststoff- oder Gummiringen 26 realisiert. Diese können in allen Richtungen deformiert werden, eine Vorzugsrichtung der Deformation ist hier nicht gegeben.

Dies führt dazu, dass diese Gummi- oder Kunststoffringe infolge ihrer Integration im Bereich der Lagerungen 15, 16 von Haus aus doppelt wirkende Elastizitäten 18 darstellen. Sie können, siehe die Figuren 16 und 17, in die eine Richtung deformiert werden und daraus resultierend die Kraft zum Bewegen von der Offenstellung (Fig. 7) in die Schließstellung (Fig. 8) begrenzen. Es kommt zu der in Fig. 8 gezeigten Deformation. Auch hier ist also lediglich die durch das jeweilige Material definierte Steifigkeit der Gummi- oder Kunststoffringe 26 zum Stellungsübergang zu überdrücken. Sie können andererseits aber auch die aufzuwendende Kraft beim Übergang von der Schließstellung in die Offenstellung begrenzen. In diesem Fall werden sie in die entgegengesetzte Richtung deformiert.

**Patentansprüche**

1. Fahrzeugrad umfassend eine Felge (2), einen an dieser befestigten Bremstopf und eine am Bremstopf befestigte Bremsscheibe, wobei an der Felge (2) mehrere schwenkbar gelagerte plattenförmige Abdeckelemente (4) zum temporären Verschließen zugeordneter felgenseitiger Durchbrechungen (3) vorgesehen sind, wobei jedes Abdeckelement (4) längs der Schwenkachse (5) gegen die Kraft eines Rückstellelements (12) verschiebbar und mit der Felge (2) über ein bei einer Verschiebebewegung zwangsführendes Koppelelement (13), mittels dem das Abdeckelement (4) von einer Offenstellung in eine Schließstellung, die das Abdeckelement (4) bei Drehung des Rads (1) fliehkraftbedingt einnimmt, bewegbar ist, verbunden ist,
**dadurch gekennzeichnet,**
**dass** das Koppelelement (13) eine integrierte Elastizität (18) aufweist oder gegen eine solche Elastizität (18) felgenseitig und/oder abdeckelementseitig gelagert ist, derart, dass die zum Bewegen eines Abdeckelements (4) aus der Offenstellung in die Schließstellung benötigte Kraft begrenzt ist.

2. Fahrzeugrad nach Anspruch 1,
**dadurch gekennzeichnet,**
**dass** die Elastizität (18) mittels wenigstens eines Federelements (19, 35, 36) oder wenigstens eines aus einem elastischen Material bestehenden Elements (26) gebildet ist.

3. Fahrzeugrad nach Anspruch 1 oder 2,
**dadurch gekennzeichnet,**
**dass** das Koppelelement (13) eine Koppelstange (14) ist.

4. Fahrzeugrad nach Anspruch 3,
**dadurch gekennzeichnet,**
**dass** das die Koppelstange (14) aus zwei Abschnitten (20, 21) besteht, die über die Elastizität (18) zueinander axial verschiebbar miteinander gekoppelt sind.

5. Fahrzeugrad nach Anspruch 4,
**dadurch gekennzeichnet,**
**dass** die Elastizität (18) eine Schraubenfeder (19, 35, 36) ist.

6. Fahrzeugrad nach einem der Ansprüche 1 bis 3,
**dadurch gekennzeichnet,**
**dass** das Koppelelement (13) eine abdeckelementseitig vorgesehene Hülse ist, die von einer die Schwenkachse bildenden Stange durchsetzt ist und mit dieser über eine Kulissenführung zusammenwirkt, wobei die Hülse über die Elastizität am Abdeckelement gelagert ist.

7. Fahrzeugrad nach Anspruch 1 bis 3,
**dadurch gekennzeichnet,**
**dass** das Koppelelement (13) eine auf der Schwenkachse (5) sitzende Hülse (25) ist, die eine mit der Schwenkachse (5) zusammenwirkende Kulissenführung (22) bildet, und die gegen die Elastizität (18) bewegbar ist.

8. Fahrzeugrad nach Anspruch 6 oder 7,
**dadurch gekennzeichnet,**
**dass** die Elastizität (18) eine Schraubenfeder (19, 35, 36) ist.

9. Fahrzeugrad nach Anspruch 1 bis 3,
**dadurch gekennzeichnet, dass**
dass das felgenseitige und/oder abdeckelementseitig gegen die Elastizität (18) gelagerte Koppelelement (13) gegen ein die Elastizität (18) bildendes elastisch deformierbares Kunststoff- oder Gummielement (26) gelagert ist.

10. Fahrzeugrad nach Anspruch 9,
**dadurch gekennzeichnet,**
**dass** das Kunststoff- oder Gummielement (26) ein Ring ist.

**Claims**

1. Vehicle wheel comprising a rim (2), a brake cup attached to said rim and a brake disc attached to the brake cup, a plurality of pivotally mounted, plateshaped cover elements (4) being provided on the rim (2) for temporarily closing assigned rim-side openings (3), each cover element (4) being displaceable along the pivot shaft (5) against the force of a restoring element (12) and being connected to the rim (2) by a coupling element (13) which is positively guided during a displacement movement and by means of which the cover element (4) can be moved from an open position into a closed position which receives the cover element (4) owing to centrifugal force during rotation of the wheel (1),
**characterised in that**
the coupling element (13) has an integrated resilient member (18) or is mounted against such a resilient member (18) on the rim side and/or on the cover element side, such that the force required to move a cover element (4) out of the open position into the closed position is restricted.

2. Vehicle wheel according to claim 1,
**characterised in that**
the resilient member (18) is created by means of at least one spring element (19, 35, 36) or at least one element (26) consisting of a resilient material.

3. Vehicle wheel according to either claim 1 or claim 2,
**characterised in that**
the coupling element (13) is a coupling rod (14).

4. Vehicle wheel according to claim 3,
**characterised in that**
the coupling rod (14) consists of two portions (20, 21) which are coupled to each other so as to be axially displaceable with respect to each other by means of the resilient member (18).

5. Vehicle wheel according to claim 4,
**characterised in that**
the resilient member (18) is a helical spring (19, 35, 36).

6. Vehicle wheel according to any of claims 1 to 3,
**characterised in that**
the coupling element (13) is a sleeve which is provided on the cover element side, is penetrated by a rod which forms the pivot shaft, and interacts therewith via a sliding block guide, the sleeve being mounted on the cover element by the resilient member.

7. Vehicle wheel according to any of claims 1 to 3,
**characterised in that**
the coupling element (13) is a sleeve (25) which rests on the pivot shaft (5), forms a sliding block guide (22) which interacts with the pivot shaft (5), and is movable against the resilient member (18).

8. Vehicle wheel according to either claim 6 or claim 7,
**characterised in that**
the resilient member (18) is a helical spring (19, 35, 36).

9. Vehicle wheel according to any of claims 1 to 3,
**characterised in that**
the rim-side and/or the cover-element-side coupling element (13) mounted against the resilient member (18) is mounted against an elastically deformable plastics or rubber element (26) that forms the resilient member (18).

10. Vehicle wheel according to claim 9,
**characterised in that**
the plastics or rubber element (26) is a ring.

## Revendications

1. Roue de véhicule comprenant une jante (2), une coupelle de frein fixée à celle-ci et un disque de frein fixé à la coupelle de frein, dans laquelle il est prévu sur la jante (2) plusieurs éléments de recouvrement (4) en forme de plaques montés à pivotement pour la fermeture temporaire de perçages correspondants (3) côté jante, dans laquelle chaque élément de recouvrement (4) peut être déplacé le long de l'axe pivot (5) à l'encontre de la force d'un élément de rappel (12) et est relié à la jante (2) via un élément de couplage (13) imposant un mouvement coulissant, au moyen duquel élément l'élément de recouvrement (4) peut être déplacé d'une position d'ouverture à une position de fermeture que l'élément de recouvrement (4) occupe lors de la rotation de la roue (1) sous l'action de la force centrifuge,
**caractérisée en ce que**
l'élément de couplage (13) présente une pièce élastique intégrée (18) ou est monté contre une telle pièce élastique (18) côté jante et/ou côté élément de recouvrement de sorte que la force nécessaire pour déplacer un élément de recouvrement (4) de la position d'ouverture à la position de fermeture soit limitée.

2. Roue de véhicule selon la revendication 1,
**caractérisée en ce que**
la pièce élastique (18) est formée au moyen d'au moins un élément de ressort (19, 35, 36) ou d'au moins un élément (26) constitué d'un matériau élastique.

3. Roue de véhicule selon la revendication 1 ou la revendication 2,
**caractérisée en ce que**
l'élément de couplage (13) est une barre de couplage (14).

4. Roue de véhicule selon la revendication 3,

**caractérisée en ce que**

la barre de couplage (14) est constituée de deux sections (20, 21), qui sont couplées l'une à l'autre de manière à pouvoir coulisser axialement l'une par rapport à l'autre sur la pièce élastique (18).

5. Roue de véhicule selon la revendication 4, **caractérisée en ce que**
la pièce élastique (18) est un ressort à boudin (19, 35, 36).

6. Roue de véhicule selon l'une quelconque des revendications 1 à 3,
**caractérisée en ce que**
l'élément de couplage (13) est une douille aménagée côté élément de recouvrement, qui est traversée par une tige formant l'axe pivot et coopère avec celle-ci via un guide de coulisse, dans laquelle la douille est montée sur l'élément de recouvrement via la pièce élastique.

7. Roue de véhicule selon les revendications 1 à 3, **caractérisée en ce que**
l'élément de couplage (13) est une douille (25) s'appuyant sur l'axe pivot (5) et qui forme un guide de coulisse (22) coopérant avec l'axe pivot (5) et peut être déplacée contre la pièce élastique (18).

8. Roue de véhicule selon la revendication 6 ou la revendication 7,
**caractérisée en ce que**
la pièce élastique (18) est un ressort à boudin (19, 35, 36).

9. Roue de véhicule selon les revendications 1 à 3, **caractérisée en ce que**
l'élément de couplage (13) monté côté jante et/ou côté élément de recouvrement contre la pièce élastique (18) est monté contre un élément de matière plastique ou de caoutchouc (26) déformable au plan élastique constituant la pièce élastique (18).

10. Roue de véhicule selon la revendication 9, **caractérisée en ce que**
l'élément de matière plastique ou de caoutchouc (26) est un anneau.

FIG. 1

FIG. 2

FIG. 3

FIG. 4

FIG. 5

FIG. 6

FIG. 7

# FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0145487 A2